Europäisches Patentamt

European Patent Office

(11) Publication number: **0 010 847**
**B1**

Office européen des brevets

(12) **EUROPEAN PATENT SPECIFICATION**

(45) Date of publication of patent specification: **15.06.83**

(51) Int. Cl.³: **B 29 D 27/00**

(21) Application number: **79301890.4**

(22) Date of filing: **14.09.79**

(54) Method and apparatus for thermoforming thermoplastic foam articles.

(30) Priority: **15.09.78 US 942836**

(43) Date of publication of application:
**14.05.80 Bulletin 80/10**

(45) Publication of the grant of the patent:
**15.06.83 Bulletin 83/24**

(84) Designated Contracting States:
**DE FR GB IT NL**

(56) References cited:
**DE - A - 1 479 343**
**DE - A - 1 729 058**
**DE - B - 1 267 412**
**US - A - 3 260 781**
**US - A - 3 825 166**

(73) Proprietor: **MOBIL OIL CORPORATION**
**150 East 42nd Street**
**New York New York 10017 (US)**

(72) Inventor: **Myers, Donald Witbeck**
**3691 East Saddleback Road**
**Canandaigua New York 14424 (US)**
Inventor: **Vivlamore, Samantha Linda**
**156 Ontario Street**
**Canandaigua New York 14424 (US)**

(74) Representative: **West, Alan Harry et al,**
**Mobil Court 3 Clements Inn**
**London WC2A 2EB (GB)**

Courier Press, Leamington Spa, England

## Method and apparatus for thermoforming thermoplastic foam articles

The present application relates to the forming of thermoplastic foam materials such as polystyrene foam by means of a thermoforming operation which employs a plug assist and vacuum draw during the molding step.

In the past matched mold thermoforming has been commonly employed to form articles from thermoplastic sheet material which has been initially formed utilizing well-known thermoplastic extrusion techniques. The sheet is subsequently preheated and placed between male and female mold halves, which, as they close, press and form the sheet into the desired shape. In this type of forming operation the material distribution in the product so formed depends on the shapes of the mold halves.

An alternative forming arrangement which may be employed to thermoform plastic sheet is vacuum thermoforming. A vacuum is applied beneath the preheated sheet and the atmospheric pressure above the sheet pushes the sheet down into contact with the mold. As the sheet contacts the mold it cools and sets in the desired configuration. Usually those areas of the sheet material which reach the vacuum mold member last are the thinnest having been drawn to a greater extent than the remainder of the material being formed.

Other known thermoforming techniques include a two-stage thermoforming technique in which a preheated plastic sheet is only partially preformed into a desired configuration and, after the preforming step, the thermoforming step is completed. This method uses matched mold members which come together to form the desired finished article. US—A—3,825,166 discloses such a forming method.

It is also know from DE—A—1479343 to deep draw a heated thermoplastic sheet by initially deforming the sheet towards a die cavity in a female mold using a mandrel through which a vacuum is applied to urge the sheet into close comforming relationship with the mandrel. After initial deformation is complete, the vacuum is released and a positive fluid pressure is introduced through the mandrel to expand the sheet against the wall of the die cavity and thereby form the final article shape.

In accordance with the present invention thermoplastic foam articles, such as polystyrene foam, are formed by a process in which the thermoplastic foam sheet is preheated to a desired temperature and a plug member of specific design is employed to prestretch and preform the foam material in the female cavity of the mold. When the plug member reaches its fully extended position, a brief delay interval of the order of 0.1 to 2.0 seconds and preferably from 0.6 to 1.2 seconds is allowed to elapse before completion of the thermoforming step. The thermoforming is completed by vaccum drawing followed by complete closure of the matched mold elements. Following formation of the desired article, the mold halves are separated and the thermoplastic sheet is sent forward to a station where the formed foam article may be trimmed from the sheet before the molding cycle is repeated.

The present invention provides a method for producing thermoformed foam articles, such as cups, which have a range of depth to top diameter ratios which is higher than those previously attainable on such objects. Additionally, utilizing the method of the present invention, the formed objects themselves have a material distribution along the side walls and base which is sufficient to impart high strength to the articles, making them adaptable for a wider variety of uses.

Generally, the preformed thermoplastic, e.g. polystyrene, foam sheet material has a thickness from 1 to 5 mm., and preferably from 2.3 to 3 mm., is preheated to a requisite forming temperature. The requisite forming temperatures may vary widely depending upon the composition and properties of the thermoplastic resin being molded. However, in the case of polystyrene, foam forming temperatures from 118° to 140°C, preferably from 124° to 135°C, are preferred. The preheated foam sheet is fed between the mold halves of a thermoforming mold where it is formed into the desired article using a combination of matched mold, plug-assist and vacuum forming. That is, after the sheet is initially firmly clamped and restrained in place, a plug member stretches the sheet as the mold cavity closes over it. When the cavity is completely closed, a vacuum is applied from the cavity side (i.e., the female mold member) to continue formation of the article. The matched core (i.e., male mold member) is then closed into the cavity to provide a controlled thickness of the final article as it also chills the article to set it.

The properties of the finished article are determined by a range of variables including foam sheet density, cell size, thickness, skin thicknesses, material temperature during forming, the design of the plug employed in the plug assist forming step, the material of construction of the plug, and the timing of the component steps of the forming cycle.

Further features and advantages of the invention will become apparent from the following description of preferred embodiments, described with reference to the accompanying drawings in which:

Figure 1 is a schematic view of the apparatus in accordance with the present invention showing a thermoplastic foam sheet as it progresses through a preheating zone and into the forming mold.

Figures 2 through 7 are schematic views in sequence of the molding apparatus being employed to form a polystyrene cup.

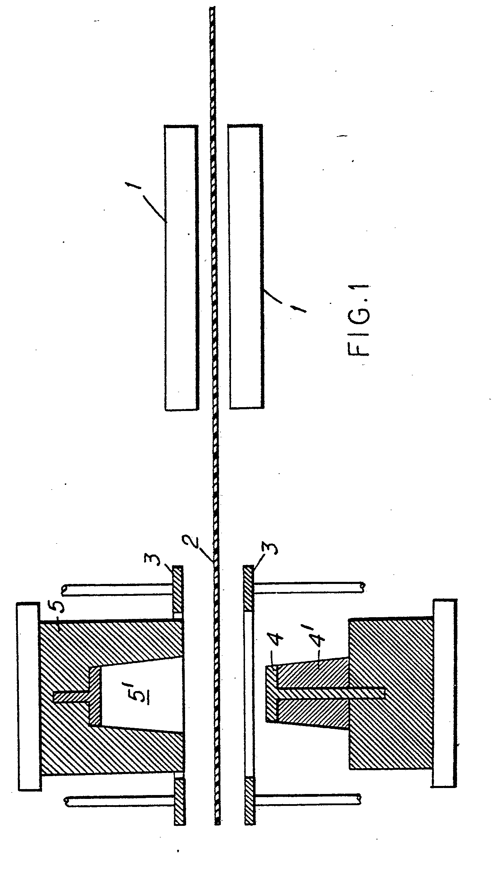

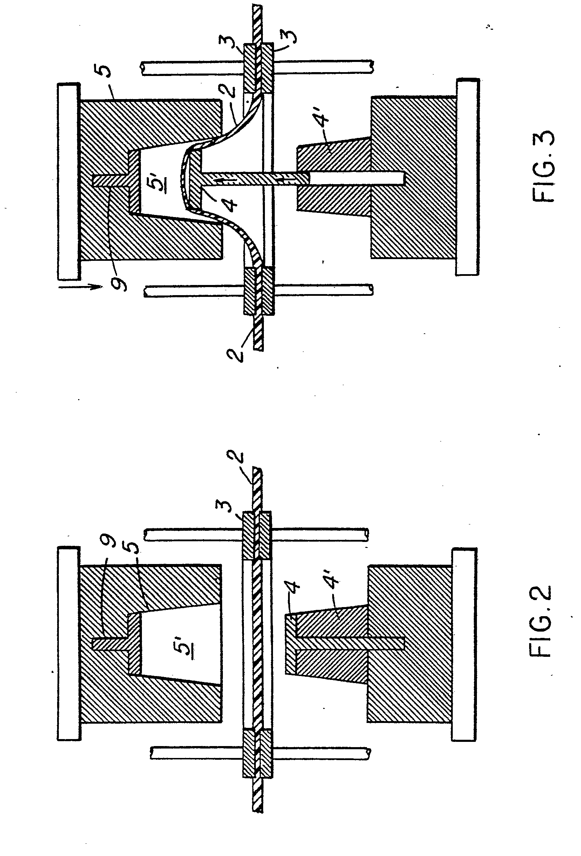

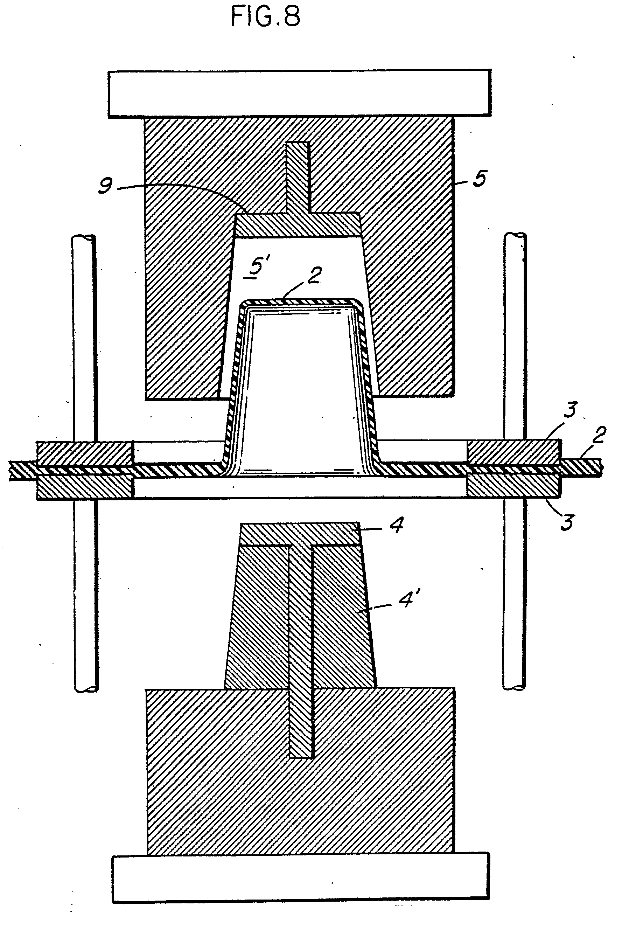

Figure 8 is a schematic view of the partially open mold halves following article formation. A polystyrene foam sheet was produced by a direct injection extrusion process. The sheet had a density of about 176 kg/m$^3$ and a thickness of about 2.5 mm. The outer skin layer on the polystyrene foam sheet had a thickness of about .76 micrometre. As shown in Figure 1, the polystyrene foam sheet is initially passed through a preheating zone 1 in which radiant heaters are used to raise the temperature of the sheet to a point at which it may be easily formed into the desired article, e.g., a temperature of about 130°C. The preheated polystyrene foam sheet 2 is then fed to the forming zone where it is clamped into a fixed position utilizing ring elements 3. These ring elements are located above and below the preheated sheet and completely surround the forming station. This is more clearly shown in Figure 2 in which clamp members 3 have secured the foam sheet and restrained it in position prior to forming. As shown in Figure 3, plug element 4 is extended from male mold member 4' and is used to prestretch foam sheet 2 partly into cavity 5'.

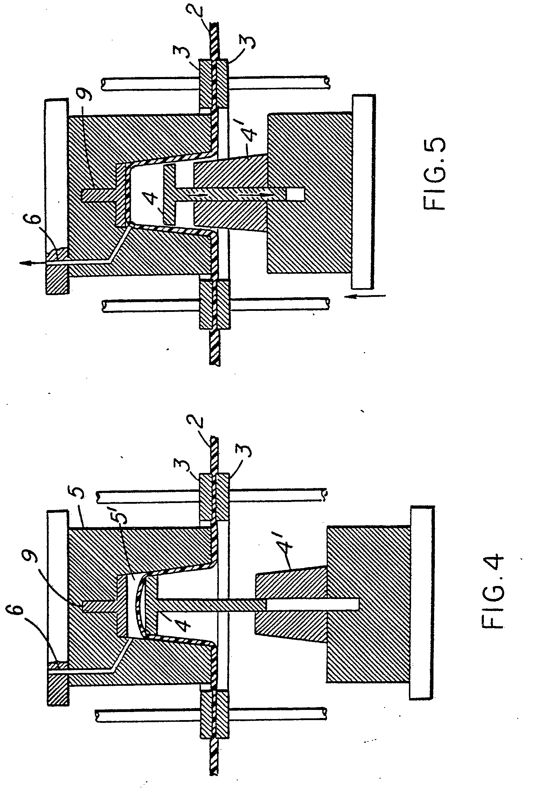

The mechanism for operation of the mold elements, not shown, is a common prior art arrangement. The mold members 4 and 5 are each mounted on platens which are operated hydraulically. After sheet 1 is heated and fed into the forming zone, the platen on which female mold member 5 is mounted begins closing. As this platen closes, it activates a number of limit switches; the first one activates clamping elements 3 and a second which activates plug element 4 which also is hydraulically operated. When this platen is completely closed, the platen that male mold member 4 is mounted on begins closing. As this platen closes, it activates a third limit switch which controls the vacuum. The vacuum is operated as the platen just starts closing, well in advance of the molds being completely closed. The formation of the article is therefore completed by the vacuum. The total closure of the molds provides only for controlling the thickness of the article and for cooling it. As plug 4 prestretches the foam into cavity 5', female mold element 5 is simultaneously closing toward mold member 4'. (see Figure 4) When plug element 4 is completely extended, a delay of about 0.9 seconds occurs before the vacuum is actuated within the confines of cavity 5'. It has been found that if the dwell time is too short, i.e., less than about 0.1 seconds, article thickness on the bottom and lower sidewalls is unacceptably reduced. If the dwell time is too long, the sheet cools excessively, and fractures when the vacuum is applied.

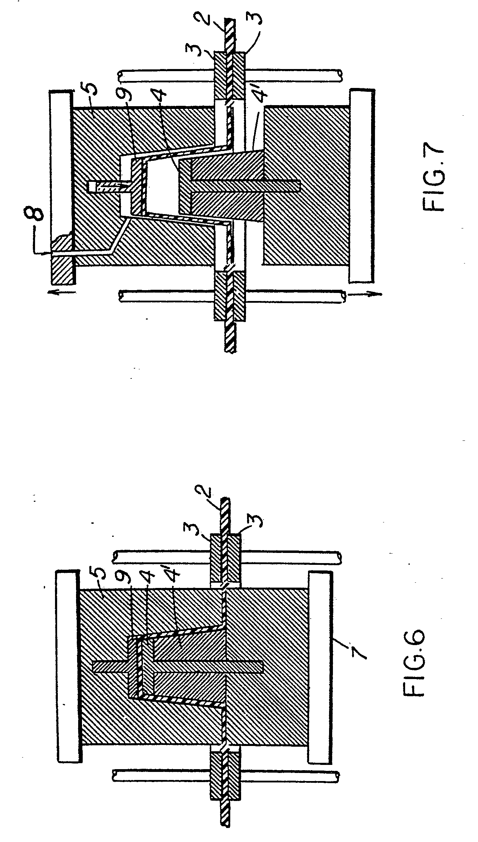

As more clearly shown in Figure 5, a controlled vacuum is applied through conduit line 6 by conventional means not shown. The vacuum is applied to the sheet through cavity 5' for about 0.6 seconds. This pulls the sheet away from plug 4 and into cavity 5'; simultaneously, core member 4' is closing into cavity 5' and plug 4 is retracting into core 4'. As shown in Figure 6, core 4' is now completely closed into cavity 5' to control the thickness of the article, i.e. to the predetermined fixed gap which exists between the mold elements when they are in the closed position. The core or male mold element 4' additionally cools the formed article to prevent it warping when the mold elements open. After a sufficient dwell time of about 1.8 seconds, the mold members open as shown in Figure 7 and an air blast is applied through conduit 8 to assist in the ejection of formed cup from the female mold cavity 5'. Additionally, an ejection piston 9, which is located at the top of cavity 5' is actuated to loosen and force the formed article out of cavity 5'. The mold elements are finally opened completely, as illustrated in Figure 1 and the sheet moves forward and the forming cycle is repeated. The advancing sheet is eventually forwarded to a trim station (not shown) where the finished article is trimmed or cut from the sheet.

During the forming operation the temperature of the mold elements, i.e. 4,4' and 5, is generally controlled within a range of from 10 to about 120°C. The male mold element 4—4' is preferably maintained at a temperature of from about 80° to 100°C. The female mold element is preferably maintained at a temperature of from about 65° to 93°C. In the present example, mole 4—4' was maintained at a temperature of about 93°C and mold 5 was maintained at about 80°C. The preheat oven temperature ranged from about 230°C to 300°C.

The shape of plug member 4 and the material of which it is made directly control the distribution of the foam sheet material along the side walls of the article being formed. Different construction materials result in marked differences in the distribution of material. Accordingly, plug construction material must be individually selected depending upon the shape of the article being formed and the desired material distribution in the formed article. Suitable materials include steel, nylon, aluminium, and syntactic foam, for example. Typically, a desirable plug material is one which is a good insulator, i.e. it neither heats up nor cools down during the forming operation.

In the preceding example where a cup was formed which is characterized by a depth to top diameter ratio of about 1.25:1 and a wall thickness of about 1.27 mm, a steel plug shaped exactly to the base of the cup and about 6 mm inches in length produces excellent results.

The thermoformed cup which was produced in Example 1 had the following dimensions:

| Height | 89 mm |
|---|---|

**Top Diameter**

| Outer Diameter | 84 mm |
|---|---|
| Inner Diameter | 76 mm |

**Bottom Diameter**

| Outer Diameter | 50.93 mm |
|---|---|
| Inner Diameter | 48.77 mm |

| Side Wall Angles | 9° |
|---|---|

| Density | 72—80 kg/m³ |
|---|---|

It will be noted that the density of the cup produced in accordance with Example 1 was from about 72—80 kg/m³. When using prior art forming techniques, such low densities were unobtainable. Densities of above about 160 kg/m³ and even higher are common utilizing the prior art cup thermoforming techniques.

The method may be employed both with single and multiple cavity molds.

## Claims

1. A method of making thermoplastic articles comprising, in sequence, the steps of:
(i) preheating a sheet (2) of thermoplastic resin foam material;
(ii) clamping the preheated foam material (2) in a fixed position; and
(iii) partly deforming the preheated foam material (2) towards a forming cavity (5'); characterised in that
(iv) the foam material is then maintained in a partly deformed condition for an interval from 0.1 up to 2.0 seconds; and that thereafter the article is
(v) completely formed article by extending the partly formed preheated sheet (2) into the forming cavity (5').

2. A method in accordance with Claim 1 which the thermoplastic foam resin material is preheated to a temperature of from 118° to 140°C.

3. A method in accordance with Claim 1 or 2 in which the partly deformed foam material (2) is maintained in the partly deformed condition for a period of about 0.9 seconds.

4. A method in accordance with any of claims 1 to 3 in which the thermoplastic resin foam comprises polystyrene foam.

5. A method in accordance with any of claims 1 to 4 in which the partial deformation of the material (2) is made by movement of a die member into the forming cavity (5') and the completion of the forming is made by vacuum drawing.

6. A method in accordance with any of claims 1 to 5 in which die members are brought together when the article is formed to control the wall thickness of the article.

7. Apparatus for making a thermoplastic article by the method of claim 1, the apparatus comprising:
(i) a heater for preheating a sheet (2) of thermoplastic foam resin material;
(ii) a clamping arrangement (3) for clamping the preheated foam material (2) in a restrained and fixed position between a female mold member (5) and a male mold element (4);
(iii) actuating means for imparting relative movement to the female mold member (5) and the male mold element (4), to move the male mold element (4) towards the interior of a mold cavity (5') in the female mold member (5) so as to partly deform said preheated foam material (2) during said relative movement; characterised by
(iv) means for maintaining the preheated foam material (2) fixed in said partly deformed condition for a period of 0.1 to 2 seconds; and
(v) means (6, 4, 4') operable after said period for completing formation of the article by completing extension of the partially deformed foam material (2) into the mold cavity (15').

8. Apparatus in accordance with claim 7 and including means (8, 9) for ejecting the formed article from the mold cavity (5').

## Revendications

1. Procédé de fabrication d'objets thermoplastiques comprenant successivement les opérations de:
(i) préchauffage d'une feuille (2) d'une mousse de résine thermoplastique,
(ii) serrage en position fixe de la mousse préchauffée (2), et
(iii) déformation partielle de la mousse préchauffée (2) vers une cavité de formage (5'), caractérisé en ce que que:
(iv) la mousse est alors maintenue à un état partiellement déformé pendant une période comprise entre 0,1 et 2,0 secondes, puis
(v) l'objet est formé complètement par allongement de la feuille préchauffée et partiellement formée (2) dans la cavité de formage (5').

2. Procédé selon la revendication 1, caractérisé en ce que la mousse de résine thermoplastique est préchauffée à une température comprise entre 118 et 140°C.

3. Procédé selon l'une des revendications 1 et 2, carctérisé en ce que la mousse partiellement déformée (2) est maintenue à un état partiellement déformé pendant une période d'environ 0,9 seconde.

4. Procédé selon l'une quelconque des revendications 1 à 3, caractérisé en ce que la mousse de résine thermoplastique est une mousse de polystyrène.

5. Procédé selon l'une quelconque des revendications 1 à 4, caractérisé en ce que la déformation partielle de la mousse (2) est réalisée par déplacement d'un organe de moulage vers l'intérieur de la cavité de formage (5') et la fin du formage est réalisée par aspiration.

6. Procédé selon l'une quelconque des revendications 1 à 5, caractérisé en ce que les organes du moule sont rapprochés lorsque l'objet est formé afin que l'épaisseur de la paroi de l'objet soit réglée.

7. Appareil de fabrication d'un objet thermoplastique par mise en oeuvre du procédé selon la revendication 1, l'appareil comprenant:

(i) un dispositif de préchauffage d'une feuille (2) d'une mousse de résine thermoplastique,

(ii) un arrangement (3) de serrage de la mousse préchauffée (2) en position fixe de retenue entre un organe femelle (5) et un élément mâle (4) de moulage,

(iii) un dispositif de manoeuvre destiné à provoquer le déplacement relatif de l'organe femelle (5) et de l'élément mâle (4) du moule afin que l'élément mâle (4) se déplace en déformant partiellement la mousse préchauffée (2) vers l'intérieur de la cavité de moulage (5') formée dans l'organe femelle (5) du moule pendant le déplacement relatif, caractérisé en ce qu'il comprend:

(iv) un dispositif destiné à maintenir fixe la mousse préchauffée (2) à l'état partiellement déformé pendant une période de 0,1 à 2 secondes, et

(v) un dispositif (6, 4, 4') destiné à fonctionner après cette période et à terminer la formation de l'objet par terminaison de l'allongement de la mousse partiellement déformée (2) dans la cavité de moulage (5').

8. Appareil selon la revendication 7, caractérisé en ce qu'il comprend un dispositif (8, 9) d'éjection de l'objet formé hors de la cavité de formage (5').

**Patentansprüche**

1. Verfahren zur Herstellung thermoplastischer Gegenstände, das in der angegebenen Reihenfolge die Schritte umfaßt;

(i) Vorerhitzen einer Platte (2) aus einem Schaumstoff aus einem thermoplastischen Harz;

(ii) Einspannen des vorerhitzten Schaumstoffs (2) in einer fixierten Lage; und

(iii) teilweises Verformen des vorerhitzten Schaumstoffes (2) in Richtung einer Formhöhlung (5'); dadurch gekennzeichnet,

(iv) daß der Schaumstoff dann in einem teilweise verformten Zustand für einen Zeitraum von 0,1 bis zu 2,0 Sek. gehalten wird; und

(v) daß danach der Gegenstand dadurch fertig geformt wird, daß die teilweise geformte vorerhitzte Platte (2) in die Formhöhlung (5') verstreckt wird.

2. Verfahren nach Anspruch 1, bei dem der thermoplastische Harz-Schaumstoff auf eine Temperatur von von 118° bis 140°C vorerhitzt wird.

3. Verfahren nach Anspruch 1 oder 2, bei dem der teilweise verformte Schaumstoff (2) im teilweise verformten Zustand für eine Periode von etwa 0,9 Sek. gehalten wird.

4. Verfahren nach einem der Ansprüche 1 bis 3, bei dem der thermoplastische Harz-Schaum Polystyrolschaum umfaßt.

5. Verfahren nach einem der Ansprüche 1 bis 4, bei dem die teilweise Verformung des Stoffes (2) durch Bewegung eines Stempelteils in die Formhöhlung (5') bewirkt wird und die Formgebung durch Vakuum-ziehen vervollständigt wird.

6. Verfahren nach einem der Ansprüche 1 bis 5, bei dem Stempelteile zusammengebracht werden, wenn der Gegenstand geformt wird, um die Wanddicke des Gegenstandes zu steuern.

7. Vorrichtung zur Herstellung eines thermoplastischen Gegenstandes nach dem Verfahren von Anspruch 1, wobei die Vorrichtung umfaßt:

(i) einen Erhitzer zum Vorerhitzen einer Platte (2) eines Schaumstoffes aus einem thermoplastischen Harz;

(ii) eine Klemmanordnung (3) zum Einklemmen des vorerhitzten Schaumstoffs (2) in gespannter und feststehender Lage zwischen einem negativen Formteil (5) und einem positiven Formelement (4);

(iii) Betätigungsmittel, um eine Relativbewegung des negativen Formteils (5) und des positiven Formelements (4) zu erreichen und das positive Formelement (4) unter Verformung des vorerhitzten Schaumstoffs (2) in Richtung des Hohlraums einer Formhöhlung (5') in dem negativen Formteil (5) während der genannten Relativbewegung zu bewegen; gekennzeichnet durch

(iv) Mittel zum Festhalten des vorerhitzten Schaumstoffs (2) im genannten teilweise verformten Zustand für einen Zeitraum von 0,1 bis 2 Sek.; und

(v) Mittel (6, 4, 4'), die nach diesem Zeitraum betrieben werden können, um die Formgebung des Gegenstandes durch Vervollständigung des Verstreckens des teilweise verformten Schaumstoffs (2) in die Formhöhlung (5') zu vervollständigen.

8. Vorrichtung nach Anspruch 7, die auch Mittel (8, 9) für den Auswurf des geformten Gegenstandes aus der Formhöhlung (5') unfaßt.

FIG.1

0 010 847

FIG. 3

FIG. 2

FIG.4

FIG.5

0 010 847

FIG.6

FIG.7

0 010 847

# FIG.8